# FASCICULE DE BREVET EUROPEEN

(11) **EP 2 770 380 B1**
(45) Date de publication et mention de la délivrance du brevet: **26.12.2018**
(21) Numéro de dépôt: 13156179.7
(22) Date de dépôt: 21.02.2013
(51) Int. Cl.: G04G 21/02, G04D 7/00, G04B 37/02

(54) **DISPOSITIF ÉLECTRONIQUE MUNI DE MOYENS DE DÉTECTION AUTOMATIQUE DE FUITE**
ELEKTRONISCHE VORRICHTUNG, DIE MIT MITTELN ZUR AUTOMATISCHEN ERKENNUNG EINES LECKS AUSGESTATTET IST
ELECTRONIC DEVICE PROVIDED WITH AN AUTOMATIC LEAK DETECTION MEANS

(43) Date de publication de la demande: 27.08.2014
(73) Titulaire: The Swatch Group Research and Development Ltd., 2074 Marin (CH)
(72) Inventeur: Willemin, Michel, 2515 Prêles (CH); Martin, Jean-Claude, 2037 Montmollin (CH); Germiquet, Christophe, 2515 Prêles (CH)
(74) Mandataire: Giraud, Eric

(56) Documents cités:
- EP-A1- 1 006 418
- EP-A1- 1 388 766
- EP-A2- 1 219 940
- JP-A- 2006 322 867
- JP-A- 2010 151 656

## Description

L'invention concerne un dispositif électronique, qui est muni de moyens de détection automatique de fuite, c'est-à-dire pour contrôler une certaine étanchéité d'un boîtier du dispositif électronique. Le dispositif électronique peut être un appareil électronique de dimension importante ou de préférence un instrument électronique portable, comme un téléphone portable ou une montre, telle qu'une montre-bracelet.

L'invention concerne également un procédé de détection automatique de fuite d'un dispositif électronique.

Un dispositif électronique peut être par exemple une montre-bracelet. Cette montre est constituée de pièces mécaniques et électroniques, qui doivent être à l'abri généralement de l'eau ou de l'humidité ou divers gaz de l'environnement. Une détection de fuite généralement de gaz doit être effectuée de manière à déterminer un degré d'étanchéité de la montre et principalement du boîtier enfermant tous les composants de la montre. Ce degré d'étanchéité est normalement déterminé lors de la conception du modèle de la montre, à savoir en fonction de l'épaisseur du boîtier avec le verre de montre et des joints d'étanchéité.

La mesure de l'étanchéité de la montre peut être définie sous une pression calculée en atmosphère ou en hecto Pascal. Différents degrés d'étanchéité peuvent être définis. Par exemple, pour se laver les mains avec une montre au poignet, elle doit être en mesure de supporter une pression de l'ordre de 3 atm, ce qui équivaut à une pression d'environ 3040 hecto Pascal. Pour prendre une douche avec la montre ou se baigner dans une piscine, elle doit être en mesure de supporter une pression de l'ordre de 5 atm, ce qui équivaut à une pression d'environ 5066 hecto Pascal. Pour une plongée dans une piscine, il faut qu'elle supporte une pression d'au moins 10 atm, ce qui équivaut à une pression d'environ 10133 hecto Pascal.

Il existe différents appareils de contrôle de l'étanchéité notamment de dispositifs électroniques sous la forme de montres à boîtier. Il est connu d'utiliser un appareil, qui fonctionne par air comprimé pour effectuer ce test d'étanchéité. Il peut être observé par exemple, si la glace de montre se déforme, lorsque la montre est mise sous pression. Si la glace se déforme, cela signifie une bonne étanchéité de la montre, alors que si aucune déformation n'est constatée, la montre est jugée non étanche. Avec un tel appareil à air comprimé, cela permet de contrôler une montre dans des conditions similaires à celles de son utilisation normale. Un tel exemple d'appareil de contrôle est un des appareils sous référence SM 8850-XX de l'entreprise Sigma Electronic SA à Bienne en Suisse.

Cependant avec tout type d'appareil de contrôle d'étanchéité connu, cela complique la manière de garantir une bonne étanchéité d'un dispositif électronique, tel qu'une montre-bracelet. Les coûts de contrôle d'étanchéité de chaque dispositif électronique, sont donc importants. Généralement, rien n'est prévu dans l'état de la technique pour pouvoir effectuer une détection de fuite d'un dispositif électronique avec des moyens propres au dispositif électronique, ce qui constitue un inconvénient.

On peut citer la demande de brevet JP 2010-151656, qui décrit un dispositif pour diagnostiquer l'étanchéité d'un boîtier. Un capteur de pression atmosphérique est disposé dans le boîtier pour permettre de déterminer la variation de pression s'il est constaté une fuite à travers le boîtier. Cependant un tel dispositif ne permet pas de déterminer la variation de pression externe au boîtier de manière à en tenir compte pour diagnostiquer l'étanchéité du boîtier, ce qui constitue un inconvénient.

Dans la demande de brevet EP 1 388 766 A1, il est également décrit un dispositif de contrôle de l'étanchéité d'un boîtier étanche d'une montre. Pour ce faire, il est prévu un capteur de pression disposé dans le boîtier de manière à déterminer des variations de pression dans le boîtier, mais il n'est pas prévu de tenir compte des variations normales de la pression externe, ce qui constitue un inconvénient.

L'invention a donc pour but de fournir un dispositif électronique, qui est muni de moyens de détection automatique de fuite, susceptible de pallier aux inconvénients de l'état de la technique, et permettant d'effectuer une mesure simple et peu onéreuse du degré d'étanchéité du dispositif électronique.

A cet effet, l'invention concerne un dispositif électronique muni de moyens de détection automatique de fuite, qui comprend les caractéristiques mentionnées dans la revendication indépendante 1.

Des formes d'exécution particulières du dispositif électronique sont définies dans les revendications dépendantes 2 à 11.

Un avantage du dispositif électronique réside dans le fait que les moyens de détection automatique de fuite pour déterminer le degré d'étanchéité du dispositif, sont constitués d'éléments relativement bon marché. Aucune disposition particulière n'est prévue pour la fixation du capteur de pression interne dans le boîtier du dispositif électronique. Le capteur de pression externe est agencé sur une surface extérieure du boîtier et relié de manière étanche à travers le boîtier à une unité de calcul. L'unité de calcul, qui est de préférence un microcontrôleur, est reliée à une plaque à circuit imprimé comme le capteur de pression interne. L'unité de calcul est ainsi connectée aux deux capteurs et peut recevoir l'alimentation électrique d'une source de tension, qui peut être une batterie, une pile ou un accumulateur pour un dispositif électronique, tel qu'une montre-bracelet.

Avantageusement le microcontrôleur est prévu pour effectuer un contrôle en continu ou par périodes temporelles programmées des valeurs de pression des deux capteurs. Le microcontrôleur peut contrôler si la variation de pression du capteur de pression interne est bien différente de la variation de pression du capteur de pression externe. Cela signifie que le boîtier est d'un degré d'étanchéité suffisant selon une marge bien déterminée de variation des pressions mesurées.

Avantageusement dans le cas d'une montre électronique, le microcontrôleur peut détecter automatiquement, si le boîtier est correctement refermé après un changement de pile ou de batterie.

A cet effet, l'invention concerne également un procédé de détection automatique de fuite d'un dispositif électronique, qui comprend les caractéristiques définies dans la revendication indépendante 12.

Des étapes particulières du procédé sont définies dans les revendications dépendantes 13 à 15.

Les buts, avantages et caractéristiques du dispositif électronique et du procédé de détection automatique de fuite du dispositif électronique apparaîtront mieux dans la description suivante sur la base d'une forme d'exécution simplifiée non limitative et illustrée par les dessins sur lesquels :
la figure 1 représente de manière simplifiée un dispositif électronique muni de moyens de détection automatique de fuite selon l'invention,
la figure 2 représente un graphique des variations captées de pression des deux capteurs de pression pour un dispositif électronique défini comme étanche selon l'invention, et
la figure 3 représente un graphique des variations captées de pression des deux capteurs de pression pour un dispositif électronique défini comme non étanche selon l'invention.

Dans la description suivante, tous les composants électroniques du dispositif électronique, qui sont bien connus d'un homme du métier dans ce domaine technique, ne sont décrits que de manière simplifiée. Le dispositif électronique peut être un appareil électronique de grande dimension, où une détection automatique de fuite doit être effectuée pour protéger certains composants placés dans un boîtier de l'appareil. De préférence, le dispositif électronique peut être un instrument électronique portable, comme un téléphone portable ou une montre, telle qu'une montre-bracelet.

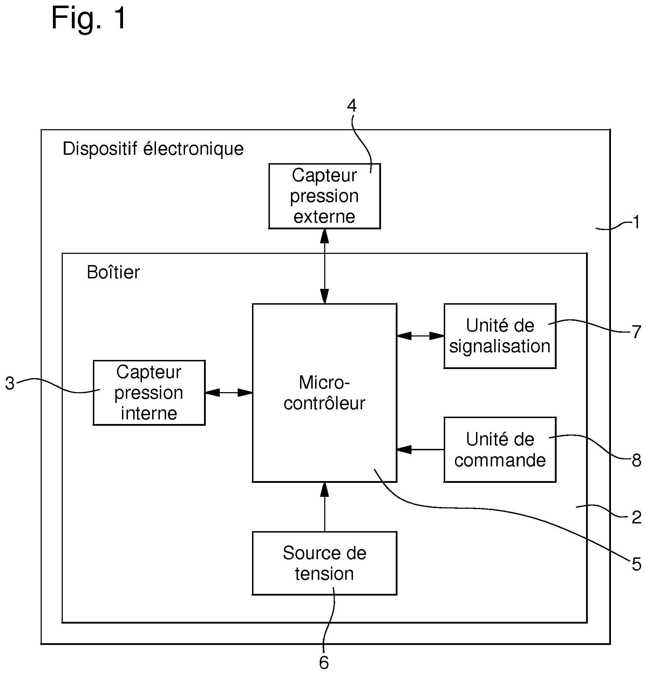

La figure 1 représente schématiquement un dispositif électronique 1, qui peut être par exemple une montre-bracelet, mais sans pour autant se limiter à ce domaine technique de l'horlogerie. Le dispositif électronique 1 comprend des moyens de détection automatique de fuite, notamment de fuite de gaz à travers un boîtier 2 du dispositif. Cela permet de déterminer si des composants électroniques du dispositif électronique sont disposés à l'intérieur d'un boîtier normalement hermétiquement fermé et selon un degré d'étanchéité suffisant. Cette détection ne permet pas de garantir une totale étanchéité du boîtier, mais uniquement d'indiquer un degré d'étanchéité selon une limite déterminée. Pour ce faire, une variation de pression doit survenir pour détecter automatiquement une fuite du boîtier.

De manière générale pour la détection automatique de fuite, le dispositif électronique 1 comprend au moins un capteur de pression interne 3 et au moins un capteur de pression externe 4. Le capteur de pression externe 4 peut être utilisé pour déterminer la pression dans l'air ambiant, voire la pression de l'eau lors d'une plongée pour un dispositif sous forme d'une montre de plongée. Le capteur de pression interne 3 et le capteur de pression externe 4 sont tous les deux reliés à une unité de calcul, qui est de préférence un microcontrôleur 5. Le microcontrôleur peut être alimenté électriquement par une source de tension 6, de manière à alimenter également les deux capteurs 3 et 4 lors de leur fonctionnement. Cette source de tension 6 peut être une pile, une batterie ou un accumulateur, dans le cas d'un dispositif électronique 1 sous la forme d'un téléphone portable ou d'une montre, telle qu'une montre-bracelet.

Le microcontrôleur 5 et le capteur de pression interne 3 sont disposés sur une plaque à circuit imprimé traditionnelle, et entièrement dans le boîtier 2 du dispositif électronique 1 sans contact avec l'extérieur. Par contre, le capteur de pression externe 4 est disposé dans un logement prévu sur une surface extérieure du boîtier 2. Une connexion électrique du capteur de pression externe 4 à la plaque à circuit imprimé portant le microcontrôleur 5, est réalisée de manière traditionnelle et étanche à travers le boîtier. Le placement et la connexion d'un tel capteur de pression externe 4 sont par exemple décrits dans le brevet EP 1 544 696 B1. En particulier, la figure 4 de ce brevet, qui est décrite aux paragraphes 23 et 24 de la description, représente une coupe d'une montre avec ce capteur de pression. Un tel capteur de pression externe peut servir également pour la mesure d'une altitude après avoir été calibré par l'intermédiaire du microcontrôleur.

Il peut aussi être prévu de lier au capteur de pression interne 3, un capteur de température non représenté. Le capteur de pression interne 3 et le capteur de température peuvent faire partie ainsi d'un même module électronique. Ce module électronique existe sur le marché à faible coût. Il peut être utilisé le module T5400 d'EPCOS AG. Ce module électronique peut être facilement fixé sur la plaque à circuit imprimé sans devoir le protéger spécifiquement à l'intérieur du boîtier 2. Dans le cas d'une montre-bracelet, la plaque à circuit imprimé portant les différents composants électroniques se situe entre le cadran de montre et le fond du boîtier en prenant appui sur un bord intérieur de la carrure du boîtier 2.

Le dispositif électronique 1 comprend encore une unité de signalisation 7. Cette unité de signalisation 7 permet d'informer ou d'avertir un utilisateur de toute fuite constatée du dispositif électronique. L'unité de signalisation 7 fournit principalement une information, si le boîtier 2 est considéré comme non étanche. Pour le cas d'une montre-bracelet, l'unité de signalisation peut être un dispositif d'affichage par exemple du type LCD ou LED ou OLED ou divers autres types de dispositifs d'affichage. L'unité de signalisation peut être aussi constituée par une ou plusieurs aiguilles. Les aiguilles peuvent être des aiguilles d'indication de l'heure traditionnelle déplacées dans un mode de signalisation pour indiquer un défaut d'étanchéité. Cette unité de signalisation peut également être un générateur de sons pour générer un son en continu ou par intermittences, ou un vibreur.

Une unité de commande 8 peut encore être prévue dans le dispositif électronique 1. Cette unité de commande 8 peut être un bouton de contrôle pour tout type de dispositif électronique 1. Dans le cas d'une montre-bracelet ou d'un téléphone portable, cette unité de commande 8 peut être constituée par un ou plusieurs boutons ou couronnes ou touches tactiles capacitives. Ces touches tactiles peuvent être disposées sous une glace de montre ou de téléphone ou en périphérie de la glace de montre ou de téléphone. L'unité de commande 8 peut être manuellement activée par exemple pour la mise en fonction de la détection automatique de fuite ou pour obtenir diverses informations du dispositif électronique. Cependant il peut être envisagé, que la détection automatique de fuite peut être toujours activée indépendamment de toute action sur l'unité de commande.

Dans le microcontrôleur 5, il peut être contrôlé l'évolution de la pression du gaz à l'intérieur du boîtier 2 du dispositif électronique par le capteur de pression interne 3, par rapport à l'évolution de la pression captée par le capteur de pression externe 4. Il est bien entendu nécessaire d'avoir une variation de pression externe ou de pression interne pour pouvoir détecter automatiquement une fuite du boîtier du dispositif. Généralement si la pression interne varie de manière similaire à la pression externe, cela signifie que le boîtier est d'un degré d'étanchéité insuffisant. Par contre si la variation dans le temps de la pression externe est bien différente de la variation dans le temps de la pression interne, cela peut signifier, que le degré d'étanchéité du boîtier peut être considéré comme suffisant.

Le microcontrôleur 5 peut calculer l'écart entre la pression interne et la pression externe à des intervalles temporels successifs ou en continu. Si l'écart est supérieur à une référence déterminée tenant compte d'une ou plusieurs mesures à des intervalles temporels successifs, le boîtier peut être considéré comme suffisamment étanche. En principe, cet écart peut être contrôlé supérieur à la référence déterminée après un laps de temps important, notamment suite à un changement de pile ou batterie du dispositif. Cette référence peut être définie par exemple à une valeur de 2 hecto Pascal ou supérieure. Dans le domaine de l'horlogerie, la vitesse limite de changement de pression interne admise est généralement de 3 heures pour passer d'une pression initiale à une pression ambiante actuelle.

Dans le boîtier 2 du dispositif électronique 1, la pression interne varie avec la température. Généralement dans un boîtier suffisamment étanche, la pression interne peut varier dans une marge définie proportionnelle avec la température. Ainsi, il peut aussi être prévu un capteur de température dans le boîtier lié au capteur de pression interne 3 pour permettre d'annuler par exemple l'effet de la température.

A ce titre, il est à noter que pour un gaz, la pression p du gaz dans le volume intérieur V du boîtier 2 du dispositif électronique 1 est déterminée par la formule p·V = n·R·T, où T est la température, n est la quantité de matière exprimée en moles, et R est la constante universelle des gaz. Selon une autre variante de mesure du degré d'étanchéité, il peut aussi être contrôlé que la variation de pression interne du gaz est proportionnelle ou dans une marge définie proportionnelle à la variation de température. Cela signifie qu'en principe le rapport p/T doit être constant pendant une durée déterminée pour garantir que le boîtier 2 par exemple de la montre ou du téléphone portable est bien étanche.

Pour éliminer l'effet de la température, le microcontrôleur 5 peut aussi déterminer une pression normalisée pₙ en référence à une température de 298 °K, ce qui correspond à une température de 25 °C T_{25°C}. Le rapport p/T entre une valeur de pression p mesurée par le capteur de pression interne et une valeur de température T mesurée par le capteur de température doit être égal à pₙ/T_{25°C}. Ainsi la pression normalisée pₙ correspond à (p/T)·T_{25°C}.

Généralement si ce rapport p/T est toujours constant par exemple après 10 heures ou si les variations de pression externe et de pression interne sont bien différentes, le boîtier 2 de la montre ou du téléphone portable peut être considéré comme étanche. La pression normalisée relative à la pression interne reste généralement constante, si le boîtier est considéré comme étanche. Il est précisé dans le domaine de l'horlogerie et selon les normes NIHS, que le boîtier 2 d'une montre est étanche, si moins de 50 µg de gaz est perdu par minute à travers le boîtier et sous une différence de pression de l'ordre de 2 bars entre la pression externe et la pression interne. Cela signifie normalement, qu'il faut environ 3 heures pour équilibrer la pression externe avec la pression interne comme susmentionné.

Si le microcontrôleur 5 détermine que les variations de pression interne et externe sont sensiblement similaires dans le temps, le porteur de la montre ou du téléphone portable est informé par l'unité de signalisation 7, que la montre ou le téléphone n'est plus garanti comme étanche. Il en est de même, s'il est effectué une mesure de pression interne et de température avec le rapport p/T, qui n'est plus constant. Une telle mesure peut être effectuée automatiquement sous le contrôle du microcontrôleur 5 dans le dispositif électronique 1, par exemple chaque heure. Dans le cas d'une montre, il peut être prévu d'effectuer un contrôle d'étanchéité à chaque intervalle temporel défini entre 1 et 6 heures. Cependant le microcontrôleur 5 peut être programmé pour déterminer en continu la variation de la pression interne par rapport à la variation de pression externe, et calculer après chaque intervalle temporel déterminé l'écart entre la valeur de pression interne et la valeur de pression externe.

Il peut être envisagé que le microcontrôleur 5 prenne en compte plusieurs valeurs de pression interne et de pression externe dans des périodes ou intervalles temporels plus courts qu'une heure. Ces valeurs sont mémorisées et/ou l'écart entre chaque valeur de pression interne et chaque valeur de pression externe dans le temps peut aussi être mémorisé. Les intervalles temporels peuvent être également de l'ordre de la minute ou de quelques minutes. Si l'écart entre les valeurs de pression reste au-dessus ou au-dessous d'une référence déterminée à une température stabilisée, il peut être constaté si le boîtier 2 est d'un degré d'étanchéité suffisant ou non.

Dans le cas d'une montre, telle qu'une montre-bracelet, des garnitures d'étanchéité sont utilisées entre les pièces du boîtier à fixer l'une sur l'autre. Ces garnitures ou joints d'étanchéité, comprimés lors de la fermeture du fond du boîtier sur la carrure, ne garantissent pas une totale étanchéité généralement. Du gaz et principalement de l'air peut passer à travers ces garnitures d'étanchéité dans le temps. Ces joints ou garnitures d'étanchéité en matériau plastique sont perméables. Ces joints peuvent également ne pas être propres, ce qui rend le boîtier non étanche.

Avec un contrôle automatique des pressions en continu par le microcontrôleur 5 ou par intervalles temporels courts, il est possible de rapidement savoir notamment lors d'un changement de pile de la montre, si le boîtier est correctement fermé ou non. La consommation électrique du fonctionnement du microcontrôleur 5 et des capteurs 3 et 4 pour déterminer le degré d'étanchéité du boîtier 2 est d'une faible valeur, ce qui ne péjore pas la durée de vie de la pile ou batterie de la montre. La pression de gaz dans le volume intérieur du boîtier 2 peut augmenter entre une valeur de la pression ambiante externe à 970 hecto Pascal avant fermeture et une valeur de pression interne à environ 1020 hecto Pascal, voire 1150 hecto Pascal après fermeture du boîtier. Cela correspond à au moins 5% de pression supplémentaire dans le volume intérieur du boîtier après fermeture. Ainsi avec une bonne étanchéité, un écart entre la pression externe et la pression interne reste supérieur à une référence déterminée à une température stabilisée après la fermeture du boîtier.

Dans le cas où le boîtier a mal été refermé, un équilibre entre la pression interne et la pression externe ambiante survient rapidement avec une forte variation de pression déjà après une dizaine de secondes, voire après 1 à 5 minutes par rapport à la variation de la température. Une forte différence de pression interne est constatée au moment de la fermeture du boîtier, et une forte différence inverse de pression interne peut aussi être constatée après la fermeture, si le boîtier est mal refermé ou un joint endommagé, mal placé ou manquant. La personne, normalement l'horloger, peut ainsi être directement informée, si oui ou non le boîtier a été correctement refermé pour garantir un degré d'étanchéité suffisant du boîtier refermé.

Il est à noter qu'un avertissement peut aussi être fourni au porteur de la montre, si les joints ou garnitures d'étanchéité se sont asséchés ou usés ou déplacés, ce qui conduit à un degré d'étanchéité non suffisant. Avec cela, il est possible de remplacer ces joints d'étanchéité et de constater par la suite que le microcontrôleur 5 ne signale plus de défaut d'étanchéité. Sans signalement par l'unité de signalisation 7, le porteur de la montre est assuré que la montre dispose d'un degré d'étanchéité suffisant en fonction de l'application souhaitée de la montre.

La surpression du gaz dans le volume intérieur du boîtier après fermeture dudit boîtier 2 diminuera très lentement à une température constante, si la montre est étanche. La pression mesurée à l'intérieur peut être à la pression ambiante dans un laps de temps pouvant aller bien au-delà de 10 heures, et même jusqu'à un mois. Ceci est dépendant de la garniture d'étanchéité de la montre. Par contre si après 1 heure, on constate une sérieuse différence de pression mesurée dans la montre à une même température, cela signifie que la montre n'est plus étanche et le porteur en est directement informé. Dans ces conditions, la pression interne va s'équilibrer à la pression externe.

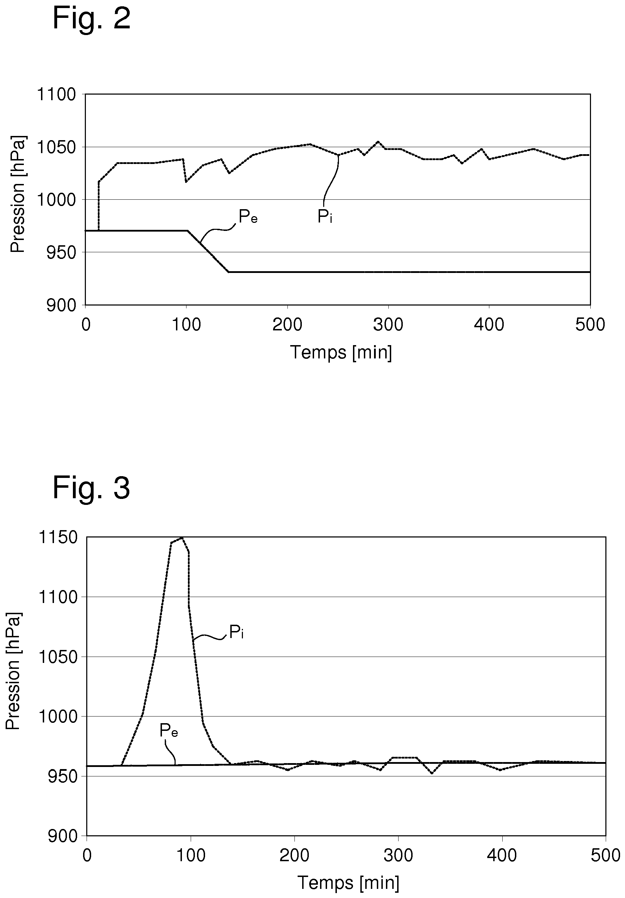

La différence entre un boîtier 2 considéré comme suffisamment étanche et un boîtier considéré comme non étanche et signalé à un utilisateur, est bien représentée aux figures 2 et 3. Sur ces figures 2 et 3, il est principalement représenté un graphe de la variation de pression interne Pi et de la variation de pression externe Pe avec une température, qui peut légèrement varier dans le temps.

Le microcontrôleur contrôle en continu ou par intervalles temporels successifs la variation des pressions interne et externe. En principe, le microcontrôleur peut déterminer l'écart en valeur absolue entre la pression interne et la pression externe à plusieurs intervalles temporels successifs. Si l'écart entre les deux pressions reste supérieur à la référence déterminée, par exemple supérieur à une valeur de 2 hecto Pascal ou supérieure, alors le boîtier peut être considéré d'un degré d'étanchéité suffisant. Cet écart de pression Δp peut être défini chaque heure par exemple, voire pour des intervalles temporels pouvant aller jusqu'à 6 heures de manière à contrôler si l'écart est supérieur ou inférieur à la référence de pression. Cependant il peut aussi être défini en fonction d'instants successifs plus courts.

A la figure 2, il est justement représenté un graphe de la variation de pression Pi à l'intérieur d'un boîtier d'une montre et de la variation de la pression externe Pe dans le temps. Au début de la mesure, le boîtier est ouvert notamment pour le changement d'une pile. La pression est donc mesurée à une valeur initiale de 970 hecto Pascal, ce qui correspond à la pression ambiante externe. La température dans ce cas de figure avant fermeture peut être par exemple à 25 °C. Après 10 ou 20 minutes, le fond du boîtier est fixé à la carrure en comprimant une garniture d'étanchéité, ce qui génère une surpression et la pression interne est ainsi mesurée à une valeur de l'ordre de 1040 hecto Pascal.

La montre peut être portée au poignet d'un utilisateur, ce qui signifie que la température T va sensiblement varier de 25 °C à un peu plus de 30 °C. On remarque qu'une fois que le boîtier de la montre a été fermé, la pression interne Pi mesurée par le capteur de pression interne peut varier en fonction de la variation de la température. Cette pression interne varie dans une marge proportionnelle à la variation de température pendant près de 8 heures suivant le changement de pile. Après 100 minutes, la pression externe Pe va diminuer d'une valeur de 970 hecto Pascal à une valeur de 930 hecto Pascal sans influencer la mesure de la pression interne. Il est facile de constater que l'évolution de la pression interne mesurée par le capteur de pression interne est différente de l'évolution de la pression externe mesurée par le capteur de pression externe. Le boîtier de la montre peut ainsi être considéré comme d'un degré d'étanchéité suffisant, car l'écart entre les deux pressions, même après plusieurs heures, reste supérieur à la référence déterminée.

A la figure 3, il est par contre représenté un graphe de la variation de pression Pi à l'intérieur d'un boîtier d'une montre et de la variation de la pression externe Pe dans le temps dans le cas d'un boîtier non étanche. Au départ, le boîtier de la montre est ouvert pour le changement de pile. La pression Pi mesurée par le capteur de pression interne est à une valeur de l'ordre de 960 hecto Pascal, tout comme la pression externe Pe mesurée par le capteur de pression externe. Après 40 minutes, le boîtier est refermé et la pression interne monte jusqu'à une valeur indiquée pouvant aller jusqu'à 1150 hecto Pascal. Cependant après moins de 2 heures, la pression interne Pi revient à une valeur proche de la pression ambiante externe Pe à 960 hecto Pascal, même avec une légère variation de la température. L'écart des pressions va devenir inférieur à la référence déterminée. Dans ces conditions, le boîtier de la montre est signalé comme étant d'un degré d'étanchéité non suffisant.

A partir de la description qui vient d'être faite, plusieurs variantes du dispositif électronique muni de moyens de détection automatique de fuite peuvent être conçues par l'homme du métier sans sortir du cadre de l'invention définie par les revendications. Le dispositif électronique peut être une montre, telle qu'une montre de plongée, pour signaler au porteur de la montre rapidement, si la montre peut être jugée d'un degré d'étanchéité suffisant ou non. Cependant pour une telle montre de plongée considérée d'un degré d'étanchéité suffisant par les moyens de détection automatique de fuite, cela ne garantit pas à 100% son étanchéité pour effectuer une plongée, car dans ces conditions il doit encore être tenu compte des déformations des différentes pièces de la montre en fonction de la profondeur.

## Revendications

1. Dispositif électronique (1), qui est muni de moyens de détection automatique de fuite d'un boîtier (2) du dispositif électronique (1), dans lequel les moyens de détection automatique de fuite comprennent un capteur de pression interne (3), un capteur de pression externe (4) et une unité de calcul (5) reliée au capteur de pression interne et au capteur de pression externe, l'unité de calcul (5) avec le capteur de pression interne (3) étant disposés à l'intérieur du boîtier (2), alors que le capteur de pression externe (4) est disposé sur une surface extérieure du boîtier (2), et dans lequel l'unité de calcul (5) est destinée à contrôler sur la base de mesures effectuées par le capteur de pression interne (3) et le capteur de pression externe (4) dans le temps, si la variation de la pression dans le boîtier (2) est différente de la variation de la pression à l'extérieur du boîtier (2) pour déterminer si le boîtier est d'un degré d'étanchéité au-dessus ou au-dessous d'une limite déterminée.

2. Dispositif électronique (1) selon la revendication 1, **caractérisé en ce que** l'unité de calcul (5) est destinée à calculer à des intervalles temporels successifs, un écart entre la pression interne et la pression externe de manière à déterminer que le boîtier est d'un degré d'étanchéité au-dessus d'une limite déterminée, si l'écart est supérieur à une référence déterminée, ou d'un degré d'étanchéité au-dessous d'une limite déterminée, si l'écart est inférieur à la référence déterminée.

3. Dispositif électronique (1) selon la revendication 2, **caractérisé en ce que** l'unité de calcul (5) est destinée à déterminer en continu la variation de la pression interne par rapport à la variation de la pression externe, et à calculer après chaque intervalle temporel déterminé, l'écart entre la pression interne et la pression externe.

4. Dispositif électronique (1) selon la revendication 1, **caractérisé en ce que** le dispositif électronique (1) est une montre ou un téléphone portable.

5. Dispositif électronique (1) selon la revendication 1, **caractérisé en ce que** l'unité de calcul est un microcontrôleur (5).

6. Dispositif électronique (1) selon la revendication 5, **caractérisé en ce que** le microcontrôleur (5) est alimenté par une source de tension (6) disposée dans le boîtier (2).

7. Dispositif électronique (1) selon la revendication 6, **caractérisé en ce que** la source de tension (6) est une pile ou un accumulateur.

8. Dispositif électronique (1) selon la revendication 6, **caractérisé en ce que** le microcontrôleur (5), ainsi que le capteur de pression interne (3) et le capteur de pression externe (4), sont mis en fonction au moment de la connexion de la source de tension (6) ou après l'activation d'une unité de commande (8).

9. Dispositif électronique (1) selon la revendication 8, qui est une montre ou un téléphone portable, **caractérisé en ce que** l'unité de commande (8) est constituée par un ou plusieurs boutons ou couronnes ou touches tactiles capacitives disposées sous une glace de montre ou de téléphone ou en périphérie de la glace de montre ou de téléphone.

10. Dispositif électronique (1) selon la revendication 1, **caractérisé en ce que** l'unité de calcul (5) commande une unité de signalisation (7) du dispositif électronique (1) de manière à signaler un degré d'étanchéité au-dessous d'une limite déterminée.

11. Dispositif électronique (1) selon la revendication 10, qui est une montre ou un téléphone portable, **caractérisé en ce que** l'unité de signalisation (7) est un dispositif d'affichage ou une ou plusieurs aiguilles pour une montre, ou un générateur de sons pour générer un son en continu ou par intermittences, ou un vibreur.

12. Procédé de détection automatique de fuite d'un dispositif électronique (1), le procédé comprenant les étapes de :
- se munir d'un dispositif selon l'une quelconque des revendications 1 à 11,
- mettre en fonction l'unité de calcul (5), le capteur de pression interne (3) et le capteur de pression externe (4),
- contrôler dans l'unité de calcul (5) sur la base de mesures effectuées par le capteur de pression interne (3) et le capteur de pression externe (4) dans le temps, si la variation de la pression dans le boîtier (2) est différente de la variation de la pression à l'extérieur du boîtier (2), et
- déterminer, par l'unité de calcul (5), en fonction de la variation de pression interne et de la variation de pression externe, si le boîtier (2) est d'un degré d'étanchéité au-dessus ou au-dessous d'une limite déterminée.

13. Procédé selon la revendication 12, **caractérisé en ce que** pour le contrôle de la variation de pression interne et de la variation de pression externe dans le boîtier (2), l'unité de calcul (5) calcule à des intervalles temporels successifs, un écart entre la pression interne et la pression externe de manière à déterminer que le boîtier est d'un degré d'étanchéité au-dessus d'une limite déterminée, si l'écart est supérieur à une référence déterminée, ou d'un degré d'étanchéité au-dessous d'une limite déterminée, si l'écart est inférieur à la référence déterminée.

14. Procédé selon la revendication 13, **caractérisé en ce que** l'unité de calcul (5) en fonction détermine en continu la variation de la pression interne par rapport à la variation de la pression externe, et calcule après chaque intervalle temporel déterminé, l'écart entre la pression interne et la pression externe.

15. Procédé selon la revendication 13, **caractérisé en ce qu'**une signalisation est fournie par le dispositif électronique, lorsqu'un degré d'étanchéité du dispositif électronique (1) est déterminé au-dessous d'une limite déterminée, si l'écart est inférieur à la référence déterminée.

## Patentansprüche

1. Elektronische Vorrichtung (1), die mit Mitteln zum automatischen Erkennen eines Lecks eines Gehäuses (2) der elektronischen Vorrichtung (1) versehen ist, wobei die Mittel zur automatischen Leckerkennung einen Innendrucksensor (3), einen Außendrucksensor (4) und eine mit dem Innendrucksensor und dem Außendrucksensor verbundene Recheneinheit (5) umfassen, wobei die Recheneinheit (5) mit dem Innendrucksensor (3) innerhalb des Gehäuses (2) angeordnet ist, während der Außendrucksensor (4) auf einer äußeren Fläche des Gehäuses (2) angeordnet ist, wobei die Recheneinheit (5) dazu bestimmt ist, anhand von Messungen, die von dem Innendrucksensor (3) und von dem Außendrucksensor (4) im Lauf der Zeit ausgeführt werden, zu prüfen, ob die Druckänderung innerhalb des Gehäuses (2) sich von der Druckänderung außerhalb des Gehäuses (2) unterscheidet, um zu bestimmen, ob das Gehäuse einen Dichtigkeitsgrad oberhalb oder unterhalb einer bestimmten Grenze besitzt.

2. Elektronische Vorrichtung (1) nach Anspruch 1, **dadurch gekennzeichnet, dass** die Recheneinheit (5) dazu bestimmt ist, in aufeinander folgenden Zeitintervallen eine Abweichung zwischen dem Innendruck und dem Außendruck zu berechnen, um zu bestimmen, ob das Gehäuse einen Dichtigkeitsgrad oberhalb einer bestimmten Grenze besitzt, wenn die Abweichung größer als eine bestimmte Referenz ist, oder einen Dichtigkeitsgrad unterhalb einer bestimmten Grenze besitzt, wenn die Abweichung kleiner als die bestimmte Referenz ist.

3. Elektronische Vorrichtung (1) nach Anspruch 2, **dadurch gekennzeichnet, dass** die Recheneinheit (5) dazu bestimmt ist, kontinuierlich die Änderung des Innendrucks in Bezug auf die Änderung des Außendrucks zu bestimmen und nach jedem bestimmten Zeitintervall die Abweichung zwischen dem Innendruck und dem Außendruck zu berechnen.

4. Elektronische Vorrichtung (1) nach Anspruch 1, **dadurch gekennzeichnet, dass** die elektronische Vorrichtung (1) eine Uhr oder ein Mobiltelefon ist.

5. Elektronische Vorrichtung (1) nach Anspruch 1, **dadurch gekennzeichnet, dass** die Recheneinheit ein Mikrocontroller (5) ist.

6. Elektronische Vorrichtung (1) nach Anspruch 5, **dadurch gekennzeichnet, dass** der Mikrocontroller (5) durch eine Spannungsquelle (6) versorgt wird, die in dem Gehäuse (2) angeordnet ist.

7. Elektronische Vorrichtung (1) nach Anspruch 6, **dadurch gekennzeichnet, dass** die Spannungsquelle (6) eine Batterie oder ein Akkumulator ist.

8. Elektronische Vorrichtung (1) nach Anspruch 6, **dadurch gekennzeichnet, dass** der Mikrocontroller (5) sowie der Innendrucksensor (3) und der Außendrucksensor (5) zum Zeitpunkt des Anschließens der Spannungsquelle (6) oder nach der Aktivierung einer Steuereinheit (8) in Betrieb versetzt werden.

9. Elektronische Vorrichtung (1) nach Anspruch 8, die eine Uhr oder ein Mobiltelefon ist, **dadurch gekennzeichnet, dass** die Steuereinheit (8) gebildet ist durch einen oder mehrere Knöpfe oder Kronen oder kapazitive Berührungstasten, die unter einem Glas der Uhr oder des Telefons oder am Umfang des Uhren- oder Telefonglases angeordnet sind.

10. Elektronische Vorrichtung (1) nach Anspruch 1, **dadurch gekennzeichnet, dass** die Recheneinheit (5) eine Signaleinheit (7) der elektronischen Vorrichtung (1) steuert, um einen Dichtigkeitsgrad unterhalb einer bestimmten Grenze zu melden.

11. Elektronische Vorrichtung (1) nach Anspruch 10, die eine Uhr oder ein Mobiltelefon ist, **dadurch gekennzeichnet, dass** die Signaleinheit (7) eine Anzeigevorrichtung oder ein oder mehrere Zeiger für eine Uhr oder ein Tongenerator zum Erzeugen eines kontinuierlichen oder intermittierenden Tons oder ein Vibrator ist.

12. Verfahren zum automatischen Erkennen eines Lecks einer elektronischen Vorrichtung (1),
wobei das Verfahren die Schritte umfasst:
- Bereitstellen einer Vorrichtung nach einem der Ansprüche 1 bis 11,
- Betreiben der Recheneinheit (5), des Innendrucksensors (3) und des Außendrucksensors (4),
- Kontrollieren in der Recheneinheit (5) anhand von Messungen, die von dem Innendrucksensor (3) und von dem Außendrucksensor (4) im Lauf der Zeit ausgeführt werden, ob die Druckänderung innerhalb des Gehäuses (2) sich von der Druckänderung außerhalb des Gehäuses (2) unterscheidet, und
- Bestimmen durch die Recheneinheit (5), abhängig von der Innendruckänderung und der Außendruckänderung, ob das Gehäuse (2) einen Dichtigkeitsgrad oberhalb oder unterhalb einer bestimmten Grenze besitzt.

13. Verfahren nach Anspruch 12, **dadurch gekennzeichnet, dass** für die Kontrolle der Innendruckänderung und der Außendruckänderung in dem Gehäuse (2) die Recheneinheit (5) in aufeinander folgenden Zeitintervallen eine Abweichung zwischen dem Innendruck und dem Außendruck berechnet, um zu bestimmen, ob das Gehäuse einen Dichtigkeitsgrad oberhalb einer bestimmten Grenze besitzt, wenn die Abweichung größer als eine bestimmte Referenz ist, oder einen Dichtigkeitsgrad unterhalb einer bestimmten Grenze besitzt, wenn die Abweichung kleiner als die bestimmte Referenz ist.

14. Verfahren nach Anspruch 13, **dadurch gekennzeichnet, dass** die Recheneinheit (5) im Betrieb kontinuierlich die Änderung des Innendrucks in Bezug auf die Änderung des Außendrucks bestimmt und nach jedem bestimmten Zeitintervall die Abweichung zwischen dem Innendruck und dem Außendruck berechnet.

15. Verfahren nach Anspruch 13, **dadurch gekennzeichnet, dass** ein Signal durch die elektronische Vorrichtung bereitgestellt wird, wenn ein Dichtigkeitsgrad der elektronischen Vorrichtung (1) als unterhalb einer bestimmten Grenze liegend bestimmt wird, wenn die Abweichung kleiner als die bestimmte Referenz ist.

## Claims

1. Electronic device (1), which is provided with an automatic leak detection means of a case (2) of the electronic device (1), wherein the automatic leak detection means includes an internal pressure sensor (3), an external pressure sensor (4) and a calculation unit (5) connected to the internal pressure sensor and to the external pressure sensor, the calculation unit (5) and the internal pressure sensor (3) being arranged inside the case (2), whereas the external pressure sensor (4) is arranged on an external surface of the case (2), and wherein the calculation unit (5) is intended to check, based on measurements made by the internal pressure sensor (3) and the external pressure sensor (4) over time, whether or not the variation in pressure inside the case (2) is different from the variation in pressure outside the case (2) to determine whether or not the case has a degree of sealing above or below a determined limit.

2. Electronic device (1) according to claim 1, **characterized in that** the calculation unit (5) is intended to calculate, at successive time intervals, a difference between the internal pressure and the external pressure so as to determine whether the case has a degree of sealing above a determined limit, if the difference is greater than a determined reference, or a degree of sealing below a determined limit, if the difference is less than the determined reference.

3. Electronic device (1) according to claim 2, **characterized in that** the calculation unit (5) is intended to continuously determine the internal pressure variation relative to the external pressure variation, and to calculate after each determined time interval, the difference between the internal pressure and the external pressure.

4. Electronic device (1) according to claim 1, **characterized in that** the electronic device (1) is a watch or a mobile telephone.

5. Electronic device (1) according to claim 1, **characterized in that** the calculation unit is a microcontroller (5).

6. Electronic device (1) according to claim 5, **characterized in that** the microcontroller (5) is powered by a voltage source (6) disposed inside the case (2).

7. Electronic device (1) according to claim 6, **characterized in that** the voltage source (6) is a battery or accumulator.

8. Electronic device (1) according to claim 6, **characterized in that** the microcontroller (5) and the internal pressure sensor (3) and the external pressure sensor (4) are actuated at the moment of connection of the voltage source (6) or after the actuation of a control unit (8).

9. Electronic device (1) according to claim 8, which is a watch or a mobile telephone, **characterized in that** the control unit (8) is formed by one or more buttons or crowns or capacitive tactile keys disposed underneath a watch crystal or telephone glass screen or at the periphery of a watch crystal or telephone glass screen.

10. Electronic device (1) according to claim 1, **characterized in that** the calculation unit (5) controls a signalling unit (7) of the electronic device (1) so as to indicate a degree of sealing below a determined limit.

11. Electronic device (1) according to claim 10, which is a watch or a mobile telephone, **characterized in that** the signalling unit (7) is a display device or one or more hands for a watch, or a sound generator for generating a continuous or intermittent sound, or a vibrator.

12. Automatic leak detection method for an electronic device (1), the method including the steps of:
- providing with a device according to any of claims 1 to 11,
- actuating the calculation unit (5), the internal pressure sensor (3) and the external pressure sensor (4),
- checking in the calculation unit (5), based on measurements performed by the internal pressure sensor (3) and the external pressure sensor (4) over time, whether the pressure variation in the case (2) is different from the pressure variation outside the case (2), and
- determining, by the calculation unit (5), as a function of the internal pressure variation and of the external pressure variation, whether the case (2) has a degree of sealing above or below a determined limit.

13. Method according to claim 12, **characterized in that**, in order to check the internal pressure variation and the external pressure variation in the case (2), the calculation unit (5) calculates, at successive time intervals, the difference between the internal pressure and the external pressure so as to determine whether the case has a degree of sealing above a determined limit, if the difference is greater than a determined reference, or a degree of sealing below a determined limit, if the difference is less than the determined reference.

14. Method according to claim 13, **characterized in that** the calculation unit (5) continuously determines the internal pressure variation relative to the external pressure variation, and after each determined time interval, calculates the difference between the internal pressure and the external pressure.

15. Method according to claim 13, **characterized in that** a warning is provided by the electronic device when the degree of sealing of the electronic device (1) is determined to be below a determined limit, if the difference is less than the determined reference.
